(19) Europäisches Patentamt
European Patent Office
Office européen des brevets

(11) Veröffentlichungsnummer: **0 262 529 B1**

(12) # EUROPÄISCHE PATENTSCHRIFT

(45) Veröffentlichungstag der Patentschrift: **21.11.91**

(51) Int. Cl.5: **C08G 18/08**, C08G 18/50, C08G 18/67, C08G 65/32

(21) Anmeldenummer: **87113694.1**

(22) Anmeldetag: **18.09.87**

(54) **Hydroxyl- und Sulfonatgruppen aufweisende Polyoxyalkylenether und deren Verwendung zur Herstellung von dispergierbaren Polyurethanen.**

(30) Priorität: **01.10.86 DE 3633421**

(43) Veröffentlichungstag der Anmeldung:
**06.04.88 Patentblatt 88/14**

(45) Bekanntmachung des Hinweises auf die Patenterteilung:
**21.11.91 Patentblatt 91/47**

(84) Benannte Vertragsstaaten:
**BE CH DE FR IT LI NL**

(56) Entgegenhaltungen:
**EP-A- 0 158 053**
**DE-A- 2 410 862**
**FR-A- 2 382 495**
**US-A- 4 436 672**

(73) Patentinhaber: **Th. Goldschmidt AG**
**Goldschmidtstrasse 100 Postfach 101461**
**W-4300 Essen 1(DE)**

(72) Erfinder: **Fock, Jürgen, Dr.**
**Mörsenbroicher Weg 114**
**W-4000 Düsseldorf 30(DE)**
Erfinder: **Schedlitzki, Dietmar, Dr.**
**Potthoffs Börde 18**
**W-4300 Essen(DE)**

**EP 0 262 529 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Polyoxyalkylenether eines mittleren Molekulargewichtes von 400 bis 10 000 mit mindestens einer endständig gebundenen Hydroxylgruppe und mindestens einer seitenständig gebundenen $-SO_3X$-Gruppe (X = Wasserstoff-, Alkali- oder Ammoniumion). Die Erfindung betrifft ferner die Verwendung dieser neuartigen Polyoxyalkylenether als mit Isocyanaten reaktionsfähige Komponente zur Herstellung von stabile wäßrige Dispersionen bildenden Polyurethanen.

Verbindungen, welche im Molekül Hydroxyl- und Sulfonatgruppen gleichzeitig aufweisen, werden entsprechend dem Stand der Technik zur Modifizierung von Polymeren verwendet, die durch Polyadditions- oder Polykondensationsverfahren herstellbar sind. Eine Verwendungsmöglichkeit für derartige Verbindungen besteht in der Modifizierung von Polyurethanen, wobei durch den Einbau hydrophiler Gruppen in das Polymere die Selbstdispergierbarkeit der Polyurethane und die Stabilität der erhaltenen Dispersionen wesentlich verbessert werden. Die Chemie und Technologie der Herstellung wäßriger Polyurethansysteme durch Einbau von hydrophilierenden Modifizierungsmitteln ist zusammenfassend in der Zeitschrift "Die Angewandte Makromolekulare Chemie", 98 (1981), 133 bis 165, dargestellt.

In der DE-PS 24 10 862 sind derartige als ionische Kettenverlängerungsmittel bekannte Modifizierungsmittel beschrieben. Es handelt sich dabei um Etherstrukturen enthaltende Dihydroxysulfonate der allgemeinen Formel

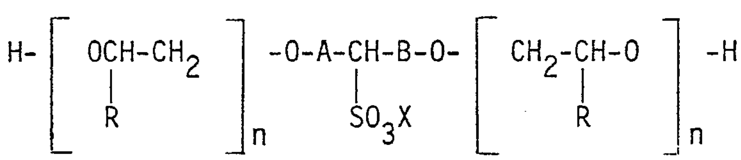

worin

| | |
|---|---|
| A und B, | die gleich oder verschieden sein können, geradkettige oder verzweigte Alkylenreste mit 1 - 6 Kohlenstoffatomen darstellen, wobei die Gesamtzahl der Kohlenstoffatome in A und B die Zahl 7 nicht übersteigt, mindestens aber 3 beträgt, |
| R | Wasserstoff, $C_1$-$C_4$-Alkylrest oder Phenyl, |
| X | $NH_4$ oder ein Alkalimetall und |
| n | eine Zahl von 1 - 30 |

bedeuten.

Das Modifizierungsmittel weist somit nur eine am Startalkohol befindliche $SO_3X$-Gruppe auf. Weitere Dihydroxysulfonate sind in der DE-PS 24 37 218 beschrieben. Auch hierbei handelt es sich um Produkte mit nur einer Sulfonatgruppe.

Gegenstand der DE-PS 34 07 563 sind sulfonierte Polyoxyalkylenether der Formel

$$R^1CH_2O\text{-}(C_2H_4O\text{-})_n(C_3H_6O\text{-})_mCH_2CHR^3CH_2\text{-}SO_3X$$

wobei $R^1$ =

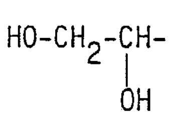 , 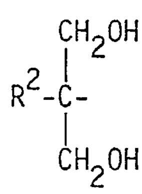 ,

$R^2$ = $CH_3$-, $C_2H_5$-, $C_3H_7$-, $R^3$ = H- oder $CH_3$-, X = H-,
Alkali oder Ammoniumion, n = 0 bis 100, m = 0 bis 50, n + m $\geq$ 1 ist. Die Verbindungen werden dadurch hergestellt, daß man an Verbindungen der Formel

$$R^1CH_2O\text{-}(C_2H_4O\text{-})_n(C_3H_6O\text{-})_mCH_2CHR^3=CH_2$$

eine Verbindung der Formel $HSO_3X$ in an sich bekannter Weise in Gegenwart von Katalysatoren und gegebenenfalls erhöhter Temperatur radikalisch addiert.

Diese Verbindungen können als alleinige oder anteilige Polyolkomponente zur Herstellung von härtbaren Klebmitteln auf Polyurethanbasis verwendet werden und bewirken eine Erhöhung der Zugscherfestigkeit und der Rollenschälfestigkeit der Klebverbunde.

Der vorliegenden Erfindung liegt die Aufgabe zugrunde, Modifizierungsmittel zur Verfügung zu stellen, welche zur Einführung hydrophiler Bereiche in Polyurethane besonders geeignet sind. Die Modifizierungsmittel sollen insbesondere eine Mehrzahl von ionischen Gruppen aufweisen, was zur Ausbildung einer physikalischen Vernetzung nach Art der Ionomeren führen kann. Die Modifizierungsmittel sollen in möglichst einfacher Weise und aus leicht zugänglichen Rohstoffen herstellbar sein.

Überraschenderweise wurde nun gefunden, daß in bestimmter Weise aufgebaute neuartige Polyoxyalkylenether diese gewünschten Anforderungen erfüllen.

Polyoxyalkylenether eines mittleren Molekulargewichtes von 400 bis 10 000 mit zwei endständig gebundenen Hydroxylgruppen und mindestens einer seitenständig gebundenen $-SO_3X$-Gruppe (X = Wasserstoff-, Alkali- oder Ammoniumion), erhältlich durch
statistische oder blockweise Anlagerung von

a) $\alpha$-Alkylenoxiden mit 2 bis 14 Kohlenstoffatomen oder Gemischen hiervon und
b) Allyl- und/oder Methallylglycidethern
an einen zweiwertigen aliphatischen Alkohol mit bis zu 8 Kohlenstoffatomen,
wobei der Allyl- und/oder Methallylglycidether und der zweiwertige Alkohol in mindestens äquimolarem Verhältnis eingesetzt werden,

Umsetzung des Polymerisates mit, bezogen auf Allylethergruppen, mindestens äquimolaren Mengen einer Verbindung der Formel $HSO_3Y$ (Y = Alkali- oder Ammoniumion) und gegebenenfalls Austausch des Kations Y gegen ein Wasserstoffion, jeweils in an sich bekannter Weise.

Bevorzugt sind Polyoxyalkylenether, welche ein mittleres Molekulargewicht von 500 bis 3000 aufweisen.

Die erfindungsgemäßen neuen Polyoxyalkylenether sollen vorzugsweise im durchschnittlichen Molekül 2 bis 6 seitenständig gebundene $-SO_3X$-Gruppen aufweisen.

Die erfindungsgemäßen Polyoxyalkylenether sind dadurch erhältlich, daß man zunächst an einen Startalkohol die Komponenten a) und b) anlagert. Als Startalkohole dienen zweiwertige aliphatische Alkohole mit bis zu 8 Kohlenstoffatomen.

Als $\alpha$-Alkylenoxide kommen insbesondere Ethylenoxid und Propylenoxid in Frage. Jedoch können auch höhere $\alpha$-Alkylenoxide mit bis zu 14 Kohlenstoffatomen, wie Butylenoxid, Octen-1-oxid, Decen-1-oxid, Dodecen-1-oxid oder Tetradecen-1-oxid, verwendet werden. Dabei können die einzelnen Alkylenoxide allein oder in Mischung mit anderen Alkylenoxiden eingesetzt werden. Besonders bevorzugt sind Polyoxyalkylenether, welche ausschließlich durch Anlagerung von Ethylenoxid und/oder Propylenoxid entstanden sind.

Die $\alpha$-Alkylenoxide (Komponente a) und die Allyl- und/oder Methallylglycidylether werden an die Startalkohole statistisch oder blockweise angelagert. Bei der statistischen Anlagerung läßt man den aliphatischen Alkohol mit dem Gemisch, bestehend aus -Alkylenoxiden und Allyl- bzw. Methallylglycidylethern, reagieren. Bei der blockweisen Anlagerung werden die Komponenten a) und b) jeweils voneinander getrennt in einer oder mehreren Stufen angelagert. So ist es beispielsweise möglich, an den Startalkohol zunächst Ethylenoxid, sodann Allylglycidylether und erneut Ethylenoxid anzulagern. Es kann natürlich an den Startalkohol auch zuerst der Allylglycidylether und dann das Alkylenoxid angelagert werden. Erfolgt die Anlagerung in voneinander getrennten Stufen, erhält man Blockpolymere, welche eine Mehrzahl von Alkylenoxidblöcken bzw. Allyl- oder Methallylglycidylethereinheiten aufweisen.

Die Anlagerung der Komponenten a) und b) an den Startalkohol erfolgt in an sich bekannter Weise zweckmäßig bei Temperaturen von 60 bis 130 °C, vorzugsweise in einem geschlossenen Reaktionsgefäß und in Gegenwart von Katalysatoren. Geeignete Katalysatoren für die Anlagerungsreaktion sind Alkalihydroxide und Alkalialkoholate.

Das erhaltene Anlagerungsprodukt wird nun in ebenfalls bekannter Weise mit Verbindungen der Formel $HSO_3Y$ umgesetzt. Y ist ein Alkali- oder Ammoniumion. Die Additionsreaktion ist z.B. in Houben-Weyl "Methoden der Organischen Chemie", Band IX, Seite 380, beschrieben. Vorzugsweise verwendet man Natriumhydrogensulfit oder Natriumpyrosulfit. Das Hydrogen- oder Pyrosulfit wird in mindestens äquimolaren Mengen, bezogen auf Allylethergruppen, verwendet. Vorzugsweise verwendet man einen bis zu fünffachen Überschuß des Sulfits. Die radikalische Addition verläuft mit hohen Ausbeuten in Gegenwart von Luftsauerstoff bei gegebenenfalls mäßig erhöhten Temperaturen von bis zu 100 °C. Die Umsetzung erfolgt in einem pH-Bereich von 4 bis 10, vorzugsweise 7 bis 8,5. Sind Verbindungen erwünscht, bei denen X ein Wasserstoffion sein soll, erhält man diese in einfacher Weise durch Austausch des Kations Y gegen ein Wasserstoffion unter Verwendung eines Ionenaustauschers.

Es ist dem Fachmann klar, daß die Reaktion auch mit anderen Metallhydrogensulfiten, wie z.B. Erdalkalihydrogensulfiten, durchgeführt werden kann, jedoch werden diese Verbindungen im allgemeinen

wegen ihrer geringeren Löslichkeit nicht verwendet.

Beispiele erfindungsgemäßer Polyoxyalkylenether sind in den folgenden Formeln wiedergegeben. Dabei bedeuten

EO Einheiten der Formel $C_2H_4O$ und

PO Einheiten der Formel $C_3H_6O$

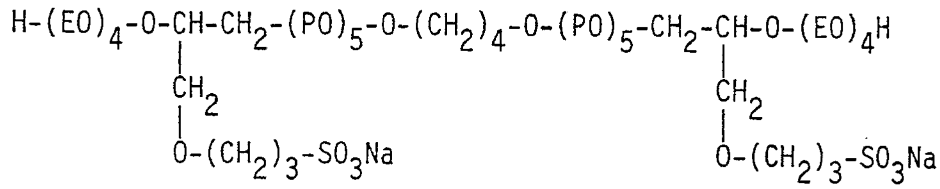

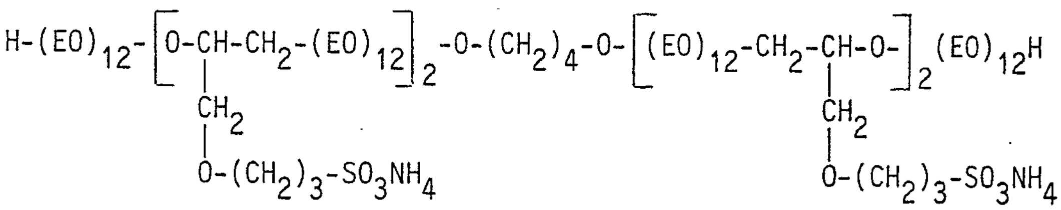

Die erfindungsgemäßen Polyoxyalkylenether zeichnen sich dadurch aus, daß sie seitenständig gebunden eine oder mehrere $-SO_3X$-Gruppen aufweisen können. Die Anzahl der $-SO_3X$-Gruppen wird in einfacher Weise innerhalb des angestrebten mittleren Molekulargewichtes durch den Anteil der Komponente b) bei der Anlagerung der Komponenten a) und b) an den aliphatischen Alkohol vorgegeben. Durch die Möglichkeit der blockweisen Anlagerung hat man es in der Hand, die $-SO_3X$-Gruppen in vorgegebener Weise im durchschnittlichen Molekül anzuordnen.

Die Hydrophilie des Modifizierungsmittels wird zusätzlich durch die Auswahl der Komponente a) beeinflußt. Verwendet man bei der Anlagerung als Alkylenoxid ausschließlich Ethylenoxid, erhält man Produkte hoher Hydrophilie. Diese Hydrophilie wird bei anteiliger oder vollständiger Verwendung längerkettiger Alkylenoxide mehr oder weniger abgeschwächt. Es ist ferner möglich, durch blockweise Anlagerung unterschiedlicher Alkylenoxide Produkte herzustellen, welche gewisse tensidische Eigenschaften aufweisen. So ist es beispielsweise möglich, an den als Startalkohol dienenden zweiwertigen aliphatischen Alkohol Propylenoxid, sodann Allylglycidylether und schließlich Ethylenoxid anzulagern. Ein solches Produkt zeigt nach seiner Umsetzung mit Verbindungen der Formel $HSO_3Y$ deutlich ausgeprägte grenzflächenaktive Eigenschaften.

Ein weiterer Gegenstand vorliegender Erfindung besteht in der Verwendung der erfindungsgemäßen Verbindungen als Hydroxylgruppen aufweisende, mit Isocyanaten reaktionsfähige Komponente zur Herstellung von stabile wäßrige Dispersionen bildenden Polyurethanen.

Besonders bevorzugt werden dabei Verbindungen verwendet, welche zwei oder mehr seitenständig gebundene $-SO_3X$-Gruppen aufweisen. Durch die Verwendung der erfindungsgemäßen Modifizierungsmittel gelingt es, Polyurethane mit einer größeren Anzahl von ionischen Gruppen herzustellen, die nicht durch die die sogenannte Hartphase bildenden Urethan- oder Harnstoffgruppen voneinander getrennt sind. Dies führt zu einer verbesserten Dispergierbarkeit der modifizierten Polyurethane. Bei der Verwendung der erfindungsgemäßen Verbindungen zur Modifizierung von Polyurethanen gelingt es insbesondere, wäßrige Dispersionen mit hohem Feststoffgehalt, z.B. Dispersionen mit einem Feststoffgehalt bis 60 Gew.-%, bezogen auf Dispersionen, herzustellen. Die erhaltenen Dispersionen sind sehr stabil und weisen eine ausgezeichnete Stabilität gegenüber Elektrolyten und bei Temperaturen unter dem Gefrierpunkt auf.

Die erfindungsgemäßen Verbindungen können jedoch auch zur Modifizierung der Polymeren, wie z.B. zur Herstellung hydrophilierter Polyester, verwendet werden. Derartige Polyester sind gut anfärbbar. Durch den Einbau der erfindungsgemäßen Verbindungen wird die Oberflächenleitfähigkeit der Polymerisate erhöht. Dies ist insbesondere bei den Anwendungsfällen von Vorteil, bei denen die elektrostatische Aufladung zu störenden Effekten führen kann.

Polyoxyethylenether mit zwei oder mehr seitenständig gebundenen $-SO_3X$-Gruppen wirken auf wäßrige Lösungen verdickend. Sie können als Komplexbildner in Elektrolyten, z.B. in der galvanischen Industrie, verwendet werden.

Herstellung und Eigenschaften der erfindungsgemäßen Polyoxyalkylenether werden in den folgenden Beispielen näher erläutert.

Beispiel 1

A) Herstellung eines blockartigen Copolymerisates aus Ethylenoxid, Propylenoxid und Allylglycidylether

90 g (1 Mol) Butandiol-1,4 und 5,6 g (0,1 Mol) Kaliumhydroxid werden in einem Reaktor nach sorgfältiger Spülung mit Reinstickstoff auf 110 °C erhitzt. Dann wird ein Gemisch aus 80 g (1,82 Mol) Ethylenoxid und 80 g (1,38 Mol) Propylenoxid so schnell zugegeben, daß die Reaktorinnentemperatur 120 °C und der Druck 6 bar nicht überschreiten. Man hält das Reaktionsgemisch so lange bei 115 °C, bis sein Epoxygehalt gegen Null gesunken ist. Danach werden bei 115 bis 120 °C 228 g (2 Mol) Allylglycidylether zugegeben, und nach vollständiger Anlagerung wird erneut ein Gemisch aus 221 g (5,02 Mol) Ethylenoxid und 221 g (3,81 Mol) Propylenoxid zugegeben. Die Temperatur wird so lange auf 115 bis 120 °C gehalten, bis der abfallende Druck im Reaktor das Ende der Reaktion anzeigt. Geringe Mengen nicht umgesetzter Monomerer werden bei 80 bis 90 °C unter Vakuum entfernt. Das erhaltene Produkt wird mit verdünnter Phosphorsäure neutralisiert, das Wasser durch Destillation und das entstandene Kaliumphosphat durch Filtration zusammen mit einem Filterhilfsmittel entfernt. Die Hydroxylzahl des Produktes beträgt 126, was bei einer angenommenen Funktionalität von 2 einem Molekulargewicht von 890 entspricht. Die Jodzahl beträgt 56,1 gegenüber der theoretischen Jodzahl von 56,4.

B) Herstellung des $\alpha,\omega$-Dihydroxypolyetherdisulfonats

890 g (1 Mol) des unter 1 A) erhaltenen Polyethers werden in einem Reaktionsgefäß mit 1500 g Wasser, 650 g Ethanol und 0,5 g Manganacetat versetzt und mit 30 gew.-%iger Natronlauge auf einen pH-Wert von 8,1 eingestellt. Bei einer Temperatur von 25 °C wird während 4 Stunden eine Lösung von 228 g (1,2 Mol) Natriumpyrosulfit in 760 g Wasser unter gleichzeitigem Einleiten von feinverteilter Luft in Mengen von 10 l pro Stunde zugesetzt, wobei der pH-Wert durch mehrere Zugaben von 30 gew.-%iger Natronlauge in einem Bereich von 7,5 bis 8,5 gehalten wird. Nach 2 Stunden Nachreaktion wird mit verdünnter Phosphorsäure neutralisiert und das Lösungsmittel durch Destillation entfernt. Nach Zugabe von 800 g Ethanol werden die Feststoffe durch Filtration entfernt und das Ethanol abdestilliert. Das erhaltene Produkt, das als Polyethersulfonat I bezeichnet wird, hat folgende Kenndaten:

| | | | |
|---|---|---|---|
| Hydroxylzahl: | 100 | Schwefelgehalt: | 5,3 Gew.-% |
| Jodzahl: | 0,6 | Säurezahl: | 0,5 |
| Molekulargewicht: | 1120 | (berechnet aus der Hydroxylzahl) | |

Beispiel 2

A) Herstellung eines blockartigen Copolymerisats aus Ethylenoxid, Propylenoxid und Allylglycidylether

An 90 g (1 Mol) Butandiol-1,4 werden nach Zusatz von 5,6 g (0,1 Mol) Kaliumhydroxid bei 115 bis 120 °C blockweise, wie in Beispiel 1 A) beschrieben, zunächst ein Gemisch aus 205 g (4,66 Mol) Ethylenoxid und 205 g (3,53 Mol) Propylenoxid, danach 228 g (2 Mol) Allylglycidylether und anschließend ein Gemisch aus 796 g (18,1 Mol) Ethylenoxid und 796 g (13,7 Mol) Propylenoxid angelagert. Nach dem Entfernen geringer Restmonomermengen im Vakuum bei 80 bis 90 °C wird das Produkt mit verdünnter Phosphorsäure neutralisiert, das Wasser durch Destillation und das entstandene Kaliumphosphat durch Filtration zusammen mit einem Filterhilfsmittel entfernt. Die Hydroxylzahl des Polyethers beträgt 50,5, was bei einer angenommenen Funktionalität von 2 einem Molekulargewicht von 2222 entspricht. Die Jodzahl beträgt 23,0 gegenüber der theoretischen Jodzahl von 23,1.

B) Herstellung des $\alpha,\omega$-Dihydroxypolyetherdisulfonats

1110 g (0,5 Mol) des unter 2 A) hergestellten Polyethers werden mit 1800 g Wasser, 760 g Ethanol und 0,56 g Manganacetat versetzt und mit 30 gew.-%iger Natronlauge auf einen pH-Wert von 8,1 eingestellt. Bei einer Temperatur von 25 °C wird während 3 Stunden eine Lösung von 114 g (0,6 Mol) Natriumpyrosulfit in 380 g Wasser unter gleichzeitigem Einleiten von feinverteilter Luft in Mengen von 10 l pro Stunde zugesetzt, wobei der pH-Wert durch mehrere Zugaben von 30 gew.-%iger Natronlauge in einem Bereich

von 7,5 bis 8,5 gehalten wird. Nach 3 Stunden Nachreaktion wird mit verdünnter Phosphorsäure neutralisiert und das Polyethersulfonat wie unter 1 B) aufgearbeitet. Das erhaltene Produkt, das als Polyethersulfonat II bezeichnet wird, hat folgende Kenndaten:

| | | | |
|---|---|---|---|
| Hydroxylzahl: | 46 | Schwefelgehalt: | 2,5 Gew.-% |
| Jodzahl: | 0,7 | Säurezahl: | 0,5 |
| Molekulargewicht: | 2440 (berechnet aus der Hydroxylzahl) | | |

Beispiel 3

A) Herstellung eines blockartigen Copolymerisats aus Ethylenoxid, Propylenoxid und Allylglycidylether

An 90 g (1 Mol) Butandiol-1,4 werden nach Zusatz von 5,6 g (0,1 Mol) Kaliumhydroxid bei 115 bis 120 °C blockweise, wie in Beispiel 1 A) beschrieben, zunächst 228 g (2 Mol) Allylglycidylether, dann ein Gemisch aus 400 g (9,09 Mol) Ethylenoxid und 400 g (6,90 Mol) Propylenoxid, anschließend 228 g (2 Mol) Allylglycidylether und am Ende ein Gemisch aus 360 g (8,18 Mol) Ethylenoxid und 360 g (6,21 Mol) Propylenoxid angelagert. Nach dem Entfernen geringer Restmonomermengen im Vakuum bei 80 bis 90 °C wird das Produkt mit verdünnter Phosphorsäure neutralisiert, das Wasser durch Destillation und das entstandene Kaliumphosphat durch Filtration zusammen mit einem Filterhilfsmittel entfernt.

Die Hydroxylzahl des Polyethers beträgt 56,8, was bei einer angenommenen Funktionalität von 2 einem Molekulargewicht von 1975 entspricht. Die Jodzahl beträgt 49,4 gegenüber der theoretischen Jodzahl von 50,6.

B) Herstellung des $\alpha,\omega$-Dihydroxypolyethertetrasulfonats

988 g (0,5 Mol) des unter 3 A) erhaltenen Polyethers werden mit 1600 g Wasser, 700 g Ethanol und 0,5 g Manganacetat versetzt und mit 30 gew.-%iger Natronlauge auf einen pH-Wert von 8,1 eingestellt. Bei einer Temperatur von 25 °C wird während 4,5 Stunden eine Lösung von 228 g (1,2 Mol) Natriumpyrosulfit in 760 g Wasser unter gleichzeitigem Einleiten von feinverteilter Luft in Mengen von 10 l pro Stunde zugesetzt, wobei der pH-Wert durch mehrere Zugaben von 30 gew.-%iger Natronlauge in einem Bereich von 7,5 bis 8,5 gehalten wird. Nach 3 Stunden Nachreaktion wird mit verdünnter Phosphorsäure neutralisiert und das Polyethersulfonat wie in Beispiel 1 B) aufgearbeitet. Das erhaltene Produkt, das als Polyethersulfonat III bezeichnet wird, hat folgende Kenndaten:

| | | | |
|---|---|---|---|
| Hydroxylzahl: | 46,8 | Schwefelgehalt: | 5,15 Gew.-% |
| Jodzahl: | 0,9 | Säurezahl: | 0,7 |
| Molekulargewicht: | 2400 (berechnet aus der Hydroxylzahl) | | |

Beispiel 4

A) Herstellung eines statistischen Copolymerisats aus Ethylenoxid, Propylenoxid und Allylglycidylether

90 g (1 Mol) Butandiol-1,4 und 5,6 g (0,1 Mol) Kaliumhydroxid werden in einem Reaktor nach sorgfältiger Spülung mit Reinstickstoff auf 110 °C erhitzt. Dann wird ein Gemisch aus 361 g (8,20 Mol) Ethylenoxid, 361 g (6,22 Mol) Propylenoxid und 228 g (2 Mol) Allylglycidylether so schnell zugegeben, daß die Reaktorinnentemperatur 120 °C und der Druck 6 bar nicht überschreiten. Man hält das Reaktionsgemisch so lange bei 115 °C, bis der Druck gesunken ist und der Epoxygehalt gegen Null gegangen ist. Geringe Mengen nicht umgesetzter Monomerer werden bei 80 bis 90 °C im Vakuum entfernt, und das Produkt wird wie in Beispiel 1 A) beschrieben aufgearbeitet.

Die Hydroxylzahl des Produkts beträgt 114, was bei einer angenommenen Funktionalität von 2 einem Molekulargewicht von 984 entspricht. Die Jodzahl beträgt 51,1 gegenüber der theoretischen Jodzahl von 50,8.

B) Herstellung des $\alpha,\omega$-Dihydroxypolyetherdisulfonats

984 g (1 Mol) des unter 4 A) erhaltenen Polyethers werden mit 1600 g Wasser, 700 g Ethanol und 0,5 g Manganacetat versetzt und mit 30 gew.-%iger Natronlauge auf einen pH-Wert von 8,1 eingestellt. Bei einer Temperatur von 25° C wird während 4 Stunden eine Lösung von 228 g (1,2 Mol) Natriumpyrosulfit in 760 g Wasser unter gleichzeitigem Einleiten von feinverteilter Luft in Mengen von 10 l pro Stunde zugesetzt, wobei der pH-Wert durch mehrere Zugaben von 30 gew.-%iger Natronlauge in einem Bereich von 7,5 bis 8,5 gehalten wird. Nach 2 Stunden Nachreaktion wird mit verdünnter Phosphorsäure neutralisiert und das Polyethersulfonat wie in Beispiel 1 B) aufgearbeitet. Das erhaltene Produkt, das als Polyethersulfonat IV bezeichnet wird, hat folgende Kenndaten:

| | | | |
|---|---|---|---|
| Hydroxylzahl: | 93,8 | Schwefelgehalt: | 5,1 Gew.-% |
| Jodzahl: | 0,7 | Säurezahl: | 0,3 |

Molekulargewicht: 1196 (berechnet aus der Hydroxylzahl)

Beispiel 5

A) Herstellung eines statistischen Copolymerisats aus Ethylenoxid und Allylglycidylether

90 g (1 Mol) Butandiol-1,4 und 5,6 g (0,1 Mol) Kaliumhydroxid werden in einem Reaktor nach sorgfältiger Spülung mit Reinstickstoff auf 110° C erhitzt. Dann wird ein Gemisch aus 228 g (2 Mol) Allylglycidylether und 792 g (18,0 Mol) Ethylenoxid so schnell zugegeben, daß die Reaktorinnentemperatur 120° C und der Druck 6 bar nicht überschreiten. Danach verfährt man wie in Beispiel 4 A) beschrieben und erhält einen Polyether mit einer Hydroxylzahl von 106, was bei einer angenommenen Funktionalität von 2 einem Molekulargewicht von 1058 entspricht. Die Jodzahl beträgt 48,8 gegenüber der theoretischen Jodzahl von 49,3.

B) Herstellung des $\alpha,\omega$-Dihydroxypolyetherdisulfonats

1058 g (1 Mol) des unter 5 A) erhaltenen Polyethers werden mit 1700 g Wasser, 750 g Ethanol und 0,54 g Manganacetat versetzt und mit 30 gew.-%iger Natronlauge auf einen pH-Wert von 8,1 eingestellt. Bei einer Temperatur von 25° C wird während 4 Stunden eine Lösung von 228 g (1,2 Mol) Natriumpyrosulfit in 760 g Wasser unter gleichzeitigem Einleiten von feinverteilter Luft in Mengen von 10 l pro Stunde zugesetzt, wobei der pH-Wert durch mehrere Zugaben von 30 gew.-%iger Natronlauge in einem Bereich von 7,5 bis 8,5 gehalten wird. Nach 2 Stunden Nachreaktion wird wie in Beispiel 1 B) beschrieben aufgearbeitet. Das erhaltene Produkt, das als Polyethersulfonat V bezeichnet wird, hat folgende Kenndaten:

| | | | |
|---|---|---|---|
| Hydroxylzahl: | 93 | Schwefelgehalt: | 5,0 Gew.-% |
| Jodzahl: | 0,9 | Säurezahl: | 0,6 |

Molekulargewicht: 1206 (berechnet aus der Hydroxylzahl)

Beispiel 6

Herstellung einer Polyurethandispersion

Eine Mischung aus 118,5 g (0,06 Mol) eines handelsüblichen Polyesterdiols aus Adipinsäure, Hexandiol-1,6 und Neopentylglykol (Hydroxylzahl 56,8) und 11,2 g (0,01 Mol) des erfindungsgemäßen Polyethersulfonats I wird bei 120° C im Vakuum von Restwassermengen befreit und danach bei 85° C mit 22,2 g (0,1 Mol) Isophorondiisocyanat versetzt. Man läßt das Reaktionsgemisch bei dieser Temperatur so lange reagieren, bis ein konstanter Isocyanatgehalt von 1,6 Gew.-% erreicht ist. Nach Verdünnung des Polymers mit 100 g wasserfreiem Aceton wird eine Lösung aus 1,5 g (0,025 Mol) Ethylendiamin und 50 g Aceton langsam bei 60° C zugetropft und so lange bei dieser Temperatur gehalten, bis der Isocyanatgehalt

unter 0,2 Gew.-% gesunken ist. Nach Abkühlung auf 30 °C werden unter wirksamem Rühren 124 g entionisiertes Wasser langsam zugesetzt, wobei sich die Polyurethandispersion bildet. Nach Entfernung des Acetons im Vakuum erhält man eine feinteilige Polyurethandispersion mit einem Feststoffgehalt von 55 Gew.-%, deren Eigenschaften in Tabelle 1 aufgeführt sind.

Beispiele 7 bis 10

Herstellung weiterer Polyurethandispersionen

Wie in Beispiel 6 beschrieben werden auf gleichem Wege aus
0,06 Mol Polyesterdiol aus Adipinsäure, Hexandiol-1,6 und Neopentylglykol (Hydroxylzahl 56,8)
0,01 Mol erfindungsgemäßer Polyethersulfonate II bis V
0,10 Mol Isophorondiisocyanat
0,025 Mol Ethylendiamin
ca. 150 g Aceton
ca. 120 - 135 g entionisiertes Wasser

Polyurethandispersionen mit Feststoffgehalten von > 50 Gew.-% hergestellt. Für die Berechnung der Polyethersulfonatmengen werden die ermittelten Hydroxylzahlen bzw. die daraus berechneten Molekulargewichte zugrunde gelegt.

Die Eigenschaften der Polyurethandispersionen sind in Tabelle 1 aufgeführt.

Zum Vergleich werden gemäß der DE-PS 24 10 862 das in dem Beispiel 5 beschriebene propoxylierte Addukt aus 2-Butendiol-1,4 und Natriumhydrogensulfit (Molekulargewicht 412) sowie gemäß der DE-PS 34 07 563 der in Beispiel 1 beschriebene sulfonierte Polyoxyalkylenether (Molekulargewicht ca. 1110) anstelle der erfindungsgemäßen Polyethersulfonate zur Herstellung von Polyurethandispersionen verwendet, wobei die Molmenge an Polyethersulfonat verdoppelt und die Molmenge an Polyesterdiol entsprechend verringert wird.

Der Vergleich zeigt, daß mit diesen Produkten Polyurethandispersionen geringerer Elektrolytbeständigkeit und/oder geringerer Kältebeständigkeit erhalten werden.

Beispiel 11

Herstellung einer Polyurethandispersion ohne Einsatz von Lösungsmitteln

Zu einer bei 120 °C im Vakuum entwässerten Mischung aus 50,0 g (0,025 Mol) eines Polyesterdiols aus Adipinsäure, Hexandiol-1,6 und Neopentylglykol (Molekulargewicht 2000) und 19,5 g (0,016 Mol) Polyethersulfonat IV werden bei 70 °C 9,7 g (0,058 Mol) Hexamethylen(1,6)-diisocyanat zugesetzt. Man erwärmt auf 80 °C, bis ein NCO-Gehalt von ca. 1,8 % erreicht ist. Anschließend werden unter wirksamem Rühren 125 g entionisiertes Wasser von 80 °C langsam zugesetzt. Nach ca. 5 Minuten fügt man eine Lösung aus 0,9 g (0,015 Mol) Ethylendiamin und 22 g entionisiertem Wasser zu und rührt ca. 30 Minuten nach.

Man erhält eine stabile, feinteilige Polyurethandispersion mit einem Feststoffgehalt von 35 Gew.-% und einer Viskosität von 3000 mPas. Die Dispersion bildet nach dem Verdunsten des Wassers eine klare, elastische Folie aus.

Tabelle 1

Eigenschaften der Polyurethandispersionen

| Beispiel | Polyethersulfonat | Feststoffgehalt (Gew.-%) | Viskosität 1) bei 25°C (mPas) | Elektrolytbeständigkeit 2) | Gefriertest 3) |
|---|---|---|---|---|---|
| a) erfindungsgemäß | | | | | |
| 6 | I | 55 | 700 | i.O. | i.O. |
| 7 | II | 57 | 3000 | i.O. | nach 3 Cyclen Anstieg der Viskosität |
| 8 | III | 56 | 160 | i.O. | i.O. |
| 9 | IV | 55 | 100 | i.O. | i.O. |
| 10 | V | 56 | 200 | i.O. | nach 3 Cyclen Anstieg der Viskosität |
| b) Vergleich | | | | | |
| DE-PS 24 10 862, Beispiel 5 | | 48 | 20 (nach 2 Wochen Bodensatz) | Ausfällung nach 5 ml NaCl-Lösung | nach 1 Cyclus fest |
| DE-PS 34 07 563, Beispiel 1 | | 50 | 600 | i.O. | nach 2 Cyclen fest |

1) gemessen mit dem Rotationsviskosimeter nach DIN 125

2) Zu 80 ml Dispersion werden unter Rühren maximal 80 ml 10 gew.-%ige wäßrige Natriumchloridlösung zugetropft und die Dispersion auf Veränderungen beurteilt.

3) 10 ml Dispersion werden 3 Stunden bei -18°C und danach 21 Stunden bei Raumtemperatur gelagert. Dieser Cyclus wird dreimal wiederholt und die Dispersion auf Veränderungen beurteilt.

## Patentansprüche

1. Polyoxyalkylenether eines mittleren Molekulargewichtes von 400 bis 10 000 mit zwei endständig gebundenen Hydroxylgruppen und mindestens einer seitenständig gebundenen $-SO_3X$-Gruppe (X =

Wasserstoff-, Alkali- oder Ammoniumion), erhältlich durch statistische oder blockweise Anlagerung von
a) α-Alkylenoxiden mit 2 bis 14 Kohlenstoffatomen oder Gemischen hiervon und
b) Allyl- und/oder Methallylglycidethern
an einen zweiwertigen aliphatischen Alkohol mit bis zu 8 Kohlenstoffatomen,
wobei der Allyl- und/oder Methallylglycidether und der zweiwertige Alkohol in mindestens äquimolarem Verhältnis eingegesetzt werden,
Umsetzung des Polymerisates mit, bezogen auf Allylethergruppen, mindestens äquimolaren Mengen einer Verbindung der Formel $HSO_3Y$ (Y = Alkali- oder Ammoniumion) und gegebenenfalls Austausch des Kations Y gegen ein Wasserstoffion, jeweils in an sich bekannter Weise.

2. Polyoxyalkylenether nach Anspruch 1, dadurch gekennzeichnet, daß er ein mittleres Molekulargewicht von 500 bis 3000 aufweist.

3. Polyoxyalkylenether nach Anspruch 1 oder 2, dadurch gekennzeichnet, daß er 2 bis 6 seitenständig gebundene $-SO_3X$-Gruppen aufweist.

4. Polyoxyalkylenether nach einem oder mehreren der vorhergehenden Ansprüche, dadurch gekennzeichnet, daß die Alkylenoxide blockweise angelagert sind.

5. Polyoxyalkylenether nach einem oder mehreren der vorhergehenden Ansprüche, dadurch gekennzeichnet, daß als Alkylenoxide Ethylenoxid und/oder Propylenoxid enthalten ist (sind).

6. Polyoxyalkylenether nach einem oder mehreren der vorhergehenden Ansprüche, dadurch gekennzeichnet, daß die beiden endständig gebundenen Hydroxylgruppen primäre Hydroxylgruppen sind.

7. Verwendung der Polyoxyalkylenether nach Ansprüchen 1 bis 6 als mit Isocyanaten reaktionsfähige Komponente zur Herstellung von stabile wäßrige Dispersionen bildenden Urethanen.

## Claims

1. Polyoxyalkylene ether having an average molecular weight of 400 to 10,000 and containing two terminal hydroxyl groups and at least one pendant $-SO_3X$ group (X = a hydrogen, alkali metal or ammonium ion), and obtainable by the random or blockwise addition reaction of
a) α-alkylene oxides having 2 to 14 carbon atoms or mixtures thereof and
b) allyl and/or methallyl glycidyl ethers
with a dihydric aliphatic alcohol having up to 8 carbon atoms,
the allyl and/or methallyl glycidyl ether and the dihydric alcohol being employed in an at least equimolar ratio,
reaction of the polymer with, based on allyl ether groups, at least equimolar amounts of a compound of the formula $HSO_3Y$ (Y = an alkali metal or ammonium ion) and optionally replacing the cation Y by a hydrogen ion, in each case in a manner known per se.

2. Polyoxyalkylene ether according to Claim 1, characterised in that it has an average molecular weight of 500 to 3,000.

3. Polyoxyalkylene ether according to Claim 1 or 2, characterised in that it contains 2 to 6 pendant $-SO_3X$ groups.

4. Polyoxyalkylene ether according to one or more of the preceding claims, characterised in that the alkylene oxides are added blockwise.

5. Polyoxyalkylene ether according to one or more of the preceding claims, characterised in that the alkylene oxides present is (are) ethylene oxide and/or propylene oxide.

6. Polyoxyalkylene ether according to one or more of the preceding claims, characterised in that the two terminal hydroxyl groups are primary hydroxyl groups.

7. The use of the polyoxyalkylene ethers according to Claims 1 to 6 as an isocyanate-reactive component

for the preparation of urethanes which form stable aqueous dispersions.

**Revendications**

1. Ether de polyoxyalkylène d'un poids moléculaire moyen de 400 à 10.000, contenant deux groupes hydroxyle fixés en fin de chaîne et au moins un groupe $-SO_3X$ fixé en position latérale (X = ion hydrogène, ion alcalin ou ion ammonium), pouvant être obtenu par
   - fixation par addition statistique ou par blocs
     a) d'oxydes d'α-alkylène contenant de 2 à 14 atomes de carbone, ou des mélanges de ceux-ci, et
     b) d'éthers glycidiques d'allyle et/ou de méthallyle
     sur un dialcool aliphatique contenant jusqu'à 8 atomes de carbone,
     l'éther glycidique d'allyle et/ou de méthallyle et le dialcool étant mis en oeuvre selon un rapport au moins équimolaire,
   - réaction du polymère avec des quantités au moins équimolaires, par rapport aux groupes d'éthers d'allyle, d'un composé de formule $HSO_3Y$ (Y = ion alcalin ou ion ammonium), et éventuellement remplacement d'un cation Y par un ion hydrogène, à chaque fois d'une manière connue en soi.

2. Ether de polyoxyalkylène selon la revendication 1, caractérisé en ce qu'il présente un poids moléculaire moyen de 500 à 3.000.

3. Ether de polyoxyalkylène selon la revendication 1 ou 2, caractérisé en ce qu'il contient de 2 à 6 groupes $-SO_3X$ fixés en position latérale.

4. Ether de polyoxyalkylène selon une ou plusieurs des revendications précédentes, caractérise en ce que les oxydes d'alkylène sont fixés par addition par blocs.

5. Ether de polyoxyalkylène selon une ou plusieurs des revendications précédentes, caractérisé en ce qu'il contient comme oxydes d'alkylène un oxyde d'éthylène et/ou un oxyde de propylène.

6. Ether de polyoxyalkylène selon une ou plusieurs des revendications précédentes, caractérisé en ce que les deux groupes hydroxyle fixés en fin de chaîne sont des groupes hydroxyle primaires.

7. Utilisation des éthers de polyoxyalkylène selon les revendications 1 à 6, comme composants aptes à réagir avec des isocyanates pour la préparation d'uréthanes formant des dispersions aqueuses stables.